# NEW EUROPEAN PATENT SPECIFICATION

(11) **EP 0 204 412 B2**
(45) Date of publication and mention of the opposition decision: **15.09.1993**
(45) Mention of the grant of the patent: 25.07.1990
(21) Application number: 86302936.9
(22) Date of filing: 18.04.1986
(51) Int. Cl.: B07B 7/083

(54) **Separator for sorting particulate material**
Sichter zum Sortieren von Materialpartikeln
Séparateur pour le tirage de particules de matière

(30) Priority: 03.06.1985 GB 8513968
(43) Date of publication of application: 10.12.1986
(73) Proprietor: F.L. Smidth & Co. A/S, DK-2500 Valby, Copenhagen (DK)
(72) Inventor: Folsberg, Jan, DK-2500 Valby Copenhagen (DK)
(74) Representative: Jackson, Peter Arthur

(56) References cited:
- EP-A- 0 199 003
- BE-A- 418 888
- ZEMENT-KALK-GIPS, vol. 38, no. 1, January 1985, pages 22-27, Wiesbaden, DE; F. SGASLIK: "Neue Erkenntnisse zur Sichtergestaltung"

## Description

### Description

The invention relates to a separator for sorting particulate material into a fine fraction and a coarse fraction, the separator comprising a rotor with a substantially vertical axis and vanes, an adjustable guide vane system through which the material suspension passes in use and which surrounds the rotor, a housing encasing the guide vane system and the rotor and having one or more inlet ducts for the supply of unsorted material suspended in a conveying gas, an outlet duct from at least one end of the separator discharging the separated fine material fraction suspended in the conveying gas, and an outlet duct beneath the rotor and the guide vane system for discharging the separated coarse material fraction for further treatment. Such a separator is hereinafter referred to as of the kind described, and a separator of this kind is disclosed in EP-A-0023320. BE-A-418888 also discloses a similar separator although the rotor has a cylindrical basket or cage, instead of vanes.

In such a separator the material to be sorted in the separator may either by introduced into the separator separately from the conveying gas into which it is then suspended just inside the guide vane system, or be presuspended in the conveying gas outside the separator so as to be fed together with the gas through the guide vane system.

In both cases the material/gas suspension is passed into the rotating rotor vanes where, as a result of the centrifugal force acting upon the material, the coarser material fraction is flung outwards towards the guide vane system.

The centrifugal force may be increased by adjusting the guide vanes so that they form a smaller angle to the tangential direction of the rotor.

The coarser particles in the suspension flung outwards towards the guide vane system will fall down along the inside of the guide vane system to the bottom of the separator to be discharged therefrom, while the finer particles remaining suspended in the gas stream are conveyed through the rotor and out through the outlet duct from the separator and subsequently from the conveying gas e.g. by a precipitator arrangement.

The separated fine fraction consists of nearly all particles below a certain first, smaller grain size, while the coarse fraction consists of nearly all particles above a certain second, larger grain size. Additionally, in both fractions there will be distribution of an intermediate fraction comprising grain size between the first and second grain sizes.

The distribution of particles of intermediate size is a measure of the inability of a separator of the kind described to provide desired precise grain size cut-off point ("cut size"), such that all particles below a certain size pass through the rotor and all particles above that size are flung towards the guide vane system.

The difference in size between the first and second grain sizes indicates the separation sharpness of the separator in question, and this separation sharpness as well as the cut size of the separator, are characteristics of the design of such a separator.

Control both of the cut-size and the separation sharpness of a separator are desired in such cases where a certain grain size distribution in the finished product (the fine fraction) must be obtained, e.g. when grinding cement, where a quite definite grain size distribution is a precondition to the strength properties and workability of the concrete to be produced from the cement.

The cut-size may be controlled by adjusting partly the rotation speed of the rotor and partly the inclination of the guide vanes, while the control of the grain size distribution in the finished product from a separator plant has hitherto required the use of two or more separators working in parallel or in series and being preset for different cut sizes.

It is the object of the invention to improve the cut-size and separation sharpness control capabilities of a separator of the kind described.

According to the invention, this is achieved by the or each inlet duct being arranged to supply the suspended material upwardly to the outside of the guide vane system and by providing the guide vane system as two or more guide vane sets mounted one above the another, and the different guide vane sets are separately adjustable.

With this construction it is possible, using the single rotor but with different adjustments of the guide vane sets, to control separation of the fine material fraction according to a desired grain size distribution which as mentioned is determined by a desired cut-size and separation sharpness. These characteristics are controlled by combination of the different cut-sizes and separation sharpness obtained by appropriate different adjustments of the guide vane sets. This combined but very simple separator is in principle working in the same manner as a plurality of separators in parallel.

Adjustment of the individual guide vane sets is preferably obtained by guide vanes belonging to one and the same guide vane set having means for joint adjustment of the vanes.

In a preferred separator construction, suited for instance for building-in at the top of a vertical roller mill, the guide vane sets are axially offset relatively to one another and at the same radial distance from the rotor axis.

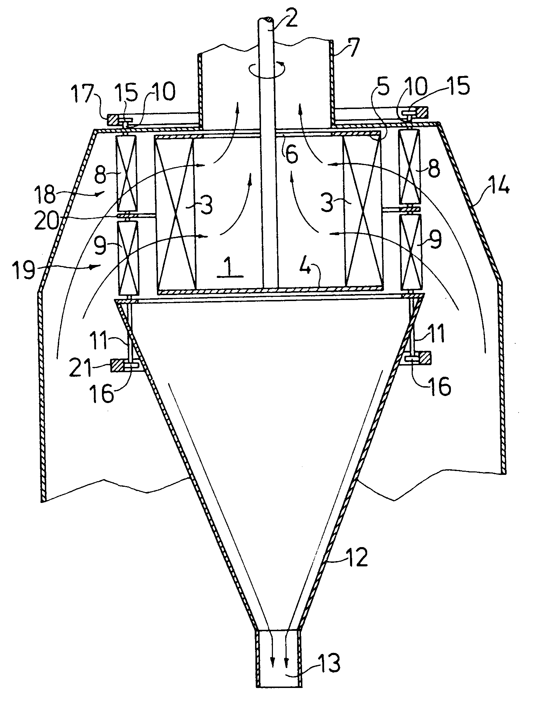

The invention will now be explained in more detail by way of an example of a separator according to the invention and with reference to the drawing which diagrammatically shows an axial section of the separator.

The separator has a rotor 1 which is rotatable about a vertical axis and driven by a motor (not shown), via a shaft 2. The rotor 1 has vanes 3 fastened partly to an annular bottom plate 4, and partly to an annular top plate 5. In the top plate 5 there is a central opening 6 leading to an outlet duct 7. Along the circumference of the rotor 1 are mounted two sets 18 and 19 of adjustable guide vanes 8 and 9.

Below the rotor 1 and the guide vanes 8, 9 is mounted a hopper 12 having an outlet 13. The separator is encased by a housing 14 which may form the top part of the mill housing for a vertical roller mill.

The guide vanes 8 are provided with shafts 10 pivotally mounted at the top of the housing 14 and in a stationary ring 20 between the two vane sets 18 and 19, and the guide vanes 9 are provided with shafts 11 pivotally mounted at the top of the hopper 12 and in the ring 20.

Each set 18 or 19 of the guide vanes 8 or 9 are adjusted simultaneously but independently by pinions 15 or 16 mounted at the one end of the shafts 10 or 11 and rotated via an adjustable ring gear 17 or 21.

The separator operates in the following way: Material to be sorted in the separator is supplied suspended in conveying gas upwards within the housing 14 to the rotor area as indicated by arrows and flows in between the vanes 8 and 9 in the two guide vane sets 18 and 19, whereby the suspension is deflected by the inclination of the guide vanes into the direction of rotation of the rotor within the rotor chamber inside the guide vanes. Both the guide vane system and the rotor thus provide for a rotation of the suspension, and owing to the centrifugal force created by this rotation a first separation takes place already at the inner side of the guide vane system. The coarser particles of the suspension will,just inside the guide vane system, be flung outwards again towards the guide vanes 8 and 9 to be stopped by the vanes and fall down into the collecting hopper 12. The remaining part of the material suspension with the finer particles flows in between the rotor vanes 3 where another separating of the particles takes place, the now remaining coarser particles also being flung by the centrifugal force from the rotor outwards towards the guide vane system to fall down into the collecting hopper 12 from which the coarser particles are discharged for further treatment.

The separated finer material fraction still suspended in the conveying gas is carried together with the gas stream through the rotor and leaves the separator through the outlet duct 7 at the top of the separator as a finished product.

## Claims

1. A separator for sorting particulate material in suspension into a fine fraction and a coarse fraction, the separator comprising a rotor (1) with a substantially vertical axis and vanes (3), an adjustable guide vane system (8, 9) through which the material suspension passes in use and which surrounds the rotor, a housing encasing the guide vane system (8, 9) and the rotor and having one or more inlet ducts (14) for the supply of unsorted material suspended in conveying gas, an outlet duct (7) from at least one end of the sepa- ratordischarging the separated fine material fraction suspended in the conveying gas and an outlet duct (12) beneath the rotor and the guide vane system for discharging the separated coarse material fraction for further treatment, characterised in that the or each inlet duct is arranged to supply the suspended material upwardly to the outside of the guide vane system, in that the guide vane system consists of two or more guide vane sets (8, 9) mounted one above the other and in that the different guide vane sets are separately adjustable.

2. A separator according to claim 1, characterised in that the guide vanes of each guide vane set have means (15, 16) for setwise adjustment of the vanes.

3. A separator according to claim 1 or claim 2, characterised in that the guide vane sets (8, 9) are axially offset relatively to one another and at the same radial distance from the rotor axis.

## Patentansprüche

1. Sichter zum Sortieren von Partikelmaterial in Suspension in eine feine und eine grobe Fraktion, wobei der Sichter verfügt über einen Rotor (1) mit einer im wesentlichen vertikalen Achse und Schaufeln (3), über ein einstellbares Leitschaufelsystem (8, 9), durch das die Materialsuspension im Betrieb hindurchtritt und das den Rotor umgibt, über ein Gehäuse, das das Leitschaufelsystem (8, 9) und den Rotor umgibt und einen oder mehrere Einlaßkanäle (14) zur Zuführung von in einem Gas suspendiertem ungesichteten Material, einen Auslaßkanal (7), der an mindestens einem Ende des Sichters die abgeschiedene feine Materialfraktion suspendiert in dem Förder- gas abgibt, und einen Auslaßkanal (12) hinter dem Rotor und dem Leitschaufelsystem zur Abgabe der abgeschiedenen groben Materialfraktion zur weiteren Behandlung aufweist, dadurch gekennzeichnet, daß der oder jeder Einlaßkanal zur Zuführung des suspendierten Materials nach oben zur Außenseite des Leitschaufelsystems angeordnet ist, das Leitschaufelsystem aus zwei oder mehr Leitschaufelsätzen (8, 9) besteht, die übereinander angeordnet sind, und daß die verschiedenen Leitschaufelsätze separat einstellbar sind.

2. Sichter nach Anspruch 1, dadurch gekennzeichnet, daß die Leitschaufeln jedes Leitschaufelsatzes Mittel (15,16) zur satzweisen Einstellung der Schaufeln aufweisen.

3. Sichter nach Anspruch 1 oder2, dadurch gekennzeichnet, daß die Leitschaufelsätze (8, 9) relativ zueinander axial versetzt und in demselben radialen Abstand von der Rotorachse angeordnet sind.

## Revendications

1. Séparateur pour trier de la matière particulaire en suspension en une fraction de fines et en une fraction grossière, le séparateur comprenant un rotor (1) ayant un axe sensiblement vertical et des pales (3), un système (8, 9) de pales de guidage réglables que la suspension de matière traverse en service et qui entoure le rotor, un corps d'enveloppe entourant le système (8, 9) des pales de guidage et le rotor et comportant un ou plusieurs conduits (14) d'entrée pour l'alimentation en de la matière non triée en suspension dans du gaz convecteur, un conduit (7) de sortie partant d'au moins une extrémité du séparateur et déchargeant la fraction de matière fine, séparée, en suspension dans le gaz convecteur, et un conduit (12) de sortie, situé sous le rotor et le système des pales de guidage pour décharger la fraction de la matière grossière séparée en vue d'un traitement ultérieur, séparateur caractérisé en ce que le ou chaque conduit d'entrée est agencé de manière à fournir la matière en suspension en un courant ascendant dirigé vers l'extérieur du système de pales de guidage, en ce que le système des pales de guidage consiste en deux ou plusieurs groupes (8, 9) de pales de guidage montés l'un au-dessus de l'autre, et en ce que les différents groupes de pales de guidage sont séparément réglables.

2. Séparateur selon la revendication 1, caractérisé en ce que les pales de guidage de chaque groupe de pales de guidage comportent des organes (15,16) pour un ajustement de réglage des pales.

3. Séparateur selon la revendication 1 ou la revendication 2, caractérisé en ce que les groupes (8, 9) de pales de guidage sont axialement décalés l'un par rapport à l'autre et à une même distance radiale de l'axe du rotor.
